# EUROPÄISCHE PATENTSCHRIFT

(11) **EP 0 521 825 B1**
(45) Veröffentlichungstag und Bekanntmachung des Hinweises auf die Patenterteilung: **14.08.1996**
(21) Anmeldenummer: 92810487.6
(22) Anmeldetag: 25.06.1992
(51) Int. Cl.: B60J 1/02

(54) **Lösbare Klebeverbindungen, Verfahren zu deren Herstellung und Verwendung von Vorrichtungen zum Lösen solcher Klebeverbindungen**
Breakable adhesive bonds, method of manufacturing the same and use of devices for breaking such adhesive bonds
Association par collage détachable, son procédé d'obtention et utilisation des dispositives pour détacher de telle association par collage

(30) Priorität: 03.07.1991 CH 1968/91
(43) Veröffentlichungstag der Anmeldung: 07.01.1993
(73) Patentinhaber: Gurit-Essex AG, CH-8807 Freienbach (CH)
(72) Erfinder: Burkart,Günter,Dr., CH-8723 Rufi (CH); Mena,José, CH-8180 Bülach (CH); Tribelhorn,Ulrich, CH-6030 Ebikon (CH)
(74) Vertreter: Rottmann, Maximilian R.

(56) Entgegenhaltungen:
- EP-A- 0 081 426
- EP-A- 0 128 837
- EP-A- 0 276 602
- EP-A- 0 312 496
- EP-A- 0 351 369

## Beschreibung

Die vorliegende Erfindung betrifft:
- lösbare Klebeverbindungen, wie sie in den Ansprüchen 1 bis 13 definiert sind;
- Verfahren zur Herstellung der erfindungsgemässen Klebeverbindungen, wie sie in den Ansprüchen 14 bis 27 definiert sind; sowie
- die Verwendung von Vorrichtungen zum Lösen von lösbaren Klebeverbindungen, wie sie in den Ansprüchen 28 bis 31 definiert sind.

Als "Klebeverbindung" wird im folgenden, in Übereinstimmung mit dem allgemeinen technischen Sprachgebrauch, die Verbindung zweier starrer Bauteile mittels einer oder mehrerer dazwischen eingebrachter Kleberaupen verstanden. Derartige Klebeverbindungen eignen sich beispielsweise besonders gut für die Montage von Fahrzeugscheiben in Karosserien und sind für diesen Einsatz beispielsweise beschrieben in den Veröffentlichungen EP-A-0 081 426, EP-A1-0 128 837 EP-A-0 312 496 und EP-A-0 351 369. Ihr Einsatz ist jedoch nicht auf die Montage von Glasscheiben beschränkt.

Diese Art Verglasungstechnik ist zwar ausserordentlich günstig bei der Herstellung der Fahrzeuge, weist aber den Nachteil auf, dass für die Reparatur und die Entsorgung (das sog. Recycling) der Fahrzeuge bisher keine gleicherweise günstige Lösung zum Trennen der Klebeverbindung bekannt war.

Bei den Klebeverbindungen der beiden erstgenannten Veröffentlichungen erfolgt das Aufheizen der Klebraupen bei der Montage mittels elektrisch aufheizbarer Heizelemente aus einem leitfähigen Lack oder Email oder aus Metall. Dies ermöglicht zwar theoretisch auch eine spätere Trennung der Klebeverbindung, jedoch nur unter Zerstörung oder Beschädigung der Kleberaupen.

Aufgabe der vorliegenden Erfindung ist nun die Schaffung von Klebeverbindungen der erwähnten Art, welche bei der Fahrzeug-Reparatur und -Entsorgung leicht lösbar sind und welche nach dem Lösen eine Wiederverwendung der betreffenden Kleberaupe zum Wiederverkleben des mit ihr verbunden gebliebenen Bauteiles ermöglichen.

Diese Aufgabe wird erfindungsgemäss gelöst durch:
- die lösbare Klebeverbindung, wie sie im Anspruch 1 definiert ist;
- das Verfahren zu deren Herstellung, wie es im Anspruch 14 definiert ist; sowie
- die Verwendung von Vorrichtungen zum lösen der lösbaren Klebeverbindung, wie sie in den Ansprüchen 28 bis 31 definiert sind.

Das erhitzbare Trennelement kann an einem der mittels der Kleberaupe bzw. Kleberaupen verbundenen Teile oder aber im Innern der Kleberaupe bzw. im Innern einer der Kleberaupen angeordnet sein. Zweckmässigerweise ist es flächenförmig ausgebildet. In diesem Falle besteht es vorzugsweise aus einer Schicht, insbesondere einer Folie, aus einem elektrisch leitenden, thermoplastischen Kunststoff und ist mit Anschlüssen für die Zufuhr von elektrischem Strom versehen.

Das erhitzbare Trennelement kann aber auch als mittels Hochfrequenz-, Mikrowellen- oder Infrarotstrahlung erhitzbare Kunststoff-Folie ausgebildet sein.

Bei lösbaren Klebeverbindungen, welche zwei Kleberaupen aufweisen, kann die eine von ihnen selbst als erhitzbares Trennelement ausgebildet sein, welches beim Erhitzen bei einer Temperatur, bei welcher die andere Kleberaupe noch nicht geschädigt wird, die Haftung an den anliegenden Teilen der Verbindung verliert oder zerstört wird und dabei die andere Kleberaupe freigibt.

Wesentlich ist, dass das Trennelement bei einer Temperatur die Haftung an den übrigen Teilen der Klebeverbindung verliert oder zerstört wird, bei welcher die auf die betreffende Kleberaupe übertragene Wärme noch nicht ausreicht, um diese zu schädigen. Eine solche Schädigung würde bei den üblichen Klebern etwa bei 200 bis 250 °C eintreten. Der Vorgang ist selbstverständlich zeitabhängig. Infolge der schlechten Wärmeleitfähigkeit der als Kleber verwendeten Kunststoffe kann daher kurzzeitig die Erhitzungstemperatur des Trennelementes durchaus höher liegen als die Schädigungstemperatur der Kleberaupe.

Bei der Herstellung der erfindungsgemässen lösbaren Klebeverbindung wird vor dem Verbinden der Teile an oder in der Kleberaupe bzw. einer der Kleberaupen ein erhitzbares Trennelement angeordnet, welches beim Erhitzen bei einer Temperatur, bei welcher die betreffende Kleberaupe noch nicht geschädigt wird, die Haftung an den anliegenden Teilen der Verbindung verliert oder zerstört wird und dabei die anliegenden Teile der betreffenden Kleberaupe freigibt.

Wenn das erhitzbare Trennelement vor dem Aufbringen der Kleberaupe bzw. der Kleberaupen auf die zu verbindenden Teile ins Innere der Kleberaupe bzw. einer der Kleberaupen eingebracht werden soll, geschieht dies zweckmässig durch Koextrusion des erhitzbaren Trennelementes zusammen mit der betreffenden Kleberaupe.

Anderseits kann das erhitzbare Trennelement aber auch vor dem Aufbringen der Kleberaupe bzw. Kleberaupen auf eines der zu verbindenden Teile aufgebracht werden, beispielsweise durch Aufspritzen, Aufstreichen oder Aufdrucken einer Schicht; Aufwalzen einer elektrisch leitenden oder mittels Hochfrequenz-, Mikrowellen- oder Infrarotstrahlung erhitzbaren Kunststoff-Folie; oder Autragen eines elektrisch leitenden bzw. mittels Hochfrequenz-, Mikrowellen- oder Infrarotstrahlung erhitzbaren Plastisols.

Die Materialien des Trennelementes sind, wie bereits indirekt erwähnt, ausgewählt aus der folgenden Gruppe:
- Polyolefine, insbesondere Polyethylene, ataktische Polypropylene, Polybutene und deren Copolymere;
- Ethylen-Vinylacetat-Copolymere;
- Ethylen-Acrylsäure-Copolymere;
- Ethylen-Methacrylsäure-Copolymere und entsprechende Metallsalze;
- gepfropfte und/oder segmentierte Ethylen-Vinylacetat-Copolymere;
- Ethylen-Propylen-Dien-Copolymere;
- thermoplastische Polyurethane;
- gesättigte Polyester und Copolyester;
- Polyamide und Copolyamide;
- Polyacrylate und Polymethacrylate; und
- Triblock- oder Biblock-Copolymere, insbesondere aus Polyamid-, Polyester- und/oder Polyether-Blöcken oder Polystyren-, Polybutadien- und Polyisobutylen-Blöcken.

Setzt man Kleberaupen auf Polyurethanbasis ein, so besteht eine Schwierigkeit darin, dass diese auf Trennfolien auf Polyethylenbasis nicht haften. Diese Schwierigkeit kann dadurch umgangen werden, dass man für die Trennfolie ein Ethylen-Acrylsäure-Copolymer mit 9 bis 20 Gew.-% Acrylsäure einsetzt. Derartige Produkte werden von der Firma The Dow Chemical Company, Midland, MI 48674, USA, unter dem Handelsnamen "Primacor" in den Handel gebracht. Geeignete Erzeugnisse sind beispielsweise "Primacor 1430", "Primacor 5980" und "Primacor 5990".

Ähnliche Erzeugnisse auf der Basis von Methycrylsäure und deren Metallsalzen werden von der Firma Du Pont unter dem Handelsnamen "Surlyn" in den Handel bebracht.

Die elektrische Leitfähigkeit kann dadurch erzeugt werden, dass dem betreffenden Material, d.h. der Schicht, beispielsweise der Folie oder dem Plastisol, bei ihrer Herstellung ein elektrisch leitendes Material in feinverteilter Form zugesetzt wird. Beispiele solcher Materialien sind:
- intrinsisch leitfähige Polymere;
- elektrisch leitfähige Russe;
- Graphit;
- Metallpulver, Metallfasern oder Metallnadeln, insbesondere aus Aluminium, Kupfer, Silber oder Wolfram;
- mit Metallen, insbesondere Aluminium, Kupfer, Silber oder Wolfram, beschichtete Füllstoffe, insbesondere metallbeschichtete Mikroglaskugeln und metallbeschichtete Textilfasern; und
- Gemische dieser Materialien.

Intrinsisch leitfähige Polymere sind unlösliche und unschmelzbare Polymere, deren pi-Elektronensystem durch Protonierung in ein Poly-Radikalkationsalz umgewandelt wurde. Dabei entsteht eine hohe elektrische Leitfähigkeit von bis zu über 10² S/cm, entsprechend einem spezifischen Widerstand von weniger als 10⁻² Ohm·cm. Geeignete Vertreter dieser Stoffklasse sind insbesondere Polyanilin (PAni) und dessen Blend mit Polyvinylchlorid (PAni/PVC). Derartige Produkte werden beispielsweise von den Firmen Zipperling Kessler & Co., D-17255 Ahrensberg, Deutschland, und Americhem Inc., Cuyahoga Falls, OH 44222-0375, USA, unter den Handelsnamen "Versicon" bzw. "Incoblend" in den Handel gebracht.

Als metallbeschichtete Textilfasern eignen sich insbesondere metallbeschichtete Polyacrylonitril-Fasern (PAN). Sie weisen einen spezifischen Widerstand von weniger als 10⁻³ Ohm·cm, entsprechend einer Leitfähigkeit von mehr als 10³ S/cm, auf. Ein derartiges Produkt wird beispielsweise von der Firma Texmet, I-28100 Novara, Italien, unter dem Handelsnamen "Texmet" in den Handel gebracht.

Ist das erhitzbare Trennelement elektrisch leitend, so erfolgt das Lösen der Klebeverbindung bei einer Fahrzeug-Reparatur oder der Fahrzeug-Entsorgung dadurch, dass dem Trennelement zwecks Erhitzung elektrischer Strom zugeführt wird.

Die Erhitzung mittels elektrischen Stroms kann mit Gleichstrom oder Wechselstrom erfolgen. Um bei flächenförmigen erhitzbaren Trennelementen allfällige Unterbrüche, welche bei der Zerstörung einer Fahrzeugscheibe entstanden sein könnten, unwirksam zu machen, empfiehlt sich die Anwendung von hochfrequentem Wechselstrom.

Ist anderseits das erhitzbare Trennelement als eine mittels Hochfrequenz-, Mikrowellen- oder Infrarotstrahlung erhitzbare Kunststoff-Folie ausgebildet, so kann die Erhitzung mittels eines Hochfrequenz-, Mikrowellen- bzw. Infrarotstrahlers erfolgen. Voraussetzung ist natürlich, dass die entsprechende Strahlungsart - sei es infolge der Geometrie der Klebeverbindung, sei es infolge des Materials von mindestens einem der verbundenen Teile - tatsächlich an den Ort der gewünschten Erhitzung gelangen kann. Wenn das eine Teil aus Glas besteht, wie dies bei eingeklebten Fahrzeugscheiben regelmässig der Fall ist, ist diese Voraussetzung in aller Regel erfüllt, da Glas für beide erwähnten Strahlungsarten durchlässig ist. Bei einer Verbindung von zwei aus Metall bestehenden Teilen ist diese Erhitzungsart jedoch nur beim Vorliegen besonderer geometrischer Verhältnisse möglich.

Zweckmässig erfolgt die Erhitzung auf eine Temperatur von mindestens 100 °C, vorzugsweise 150 °C.

Für den Fall einer Reparatur, d.h. beispielsweise für den Austausch einer defekten Fahrzeugscheibe, ist eine möglichst glatte Trennfläche erwünscht, welche ohne Nachbearbeitung als Grundlage für die neue Verklebung dienen kann. Aus diesem Grunde wird die erste Ausführungsform der erfindungsgemässen Klebeverbindung, insbesondere mit einem flächenförmigen erhitzbaren Trennelement, bevorzugt.

Soll die Klebeverbindung dagegen nur bei einer Entsorgung getrennt werden, so ist die Güte der Trennfläche unerheblich, so dass auch nicht flächenförmige Trennelemente ebensogute Dienste leisten. Das gleiche gilt auch, wenn besondere geometrische Verhältnisse, beispielsweise sehr dünne Kleberaupen, vorliegen.

Für die Herstellung von lösbaren Klebeverbindungen, welche zwei Kleberaupen aufweisen, kann man auch so vorgehen, dass man die eine Kleberaupe selbst als erhitzbares Trennelement ausbildet, welches beim Erhitzen bei einer Temperatur, bei welcher die andere Kleberaupe noch nicht geschädigt wird, die Haftung an den anliegenden Teilen der Verbindung verliert oder zerstört wird und dabei die andere Kleberaupe freigibt.

Als Basismaterial für solche als erhitzbares Trennelement ausgebildete Kleberaupen eignen sich beispielsweise die von der Firma The Dow Chemical Company, Midland, MI 48674, USA, unter dem Handelsnamen "Primacor Adhesive Polymer" in den Handel gebrachten Produkte. Geeignete Erzeugnisse sind beispielsweise "Primacor 5980" und "Primacor 5990".

Beispiele der erfindungsgemässen Klebeverbindung werden nachstehend anhand der Zeichnung näher erläutert. Es stellen dar:
- Fig. 1: einen schematischen, nichtmassstäblichen Schnitt durch eine erste Ausführungsform der erfindungsgemässen Klebeverbindung im Zusammenhang mit klebemontierten Fahrzeugscheiben;
- Fig. 2: einen schematischen, nichtmassstäblichen Schnitt durch eine zweite Ausführungsform der erfindungsgemässen Klebeverbindung im Zusammenhang mit klebemontierten Fahrzeugscheiben;
- Fig. 3: einen schematischen, nichtmassstäblichen Schnitt durch eine dritte Ausführungsform der erfindungsgemässen Klebeverbindung im Zusammenhang mit klebemontierten Fahrzeugscheiben;
- Fig. 4: einen schematischen, nichtmassstäblichen Schnitt durch eine vierte Ausführungsform der erfindungsgemässen Klebeverbindung im Zusammenhang mit klebemontierten Fahrzeugscheiben;
- Fig. 5: einen schematischen, nichtmassstäblichen Schnitt durch eine fünfte Ausführungsform der erfindungsgemässen Klebeverbindung im Zusammenhang mit klebemontierten Fahrzeugscheiben;
- Fig. 6: einen schematischen, nichtmassstäblichen Schnitt durch eine sechste Ausführungsform der erfindungsgemässen Klebeverbindung im Zusammenhang mit klebemontierten Fahrzeugscheiben;
- Fig. 7: einen schematischen, nichtmassstäblichen Schnitt durch eine siebente Ausführungsform der erfindungsgemässen Klebeverbindung im Zusammenhang mit klebemontierten Fahrzeugscheiben; und
- Fig. 8: einen schematischen, nichtmassstäblichen Schnitt durch eine achte Ausführungsform der erfindungsgemässen Klebeverbindung im Zusammenhang mit klebemontierten Fahrzeugscheiben.

In der nachfolgenden Beschreibung, in der die Zeichnungen ausführlich beschrieben werden, wird jeweils auf das Beispiel einer in einen Rahmen eingeklebten Fahrzeugscheibe Bezug genommen. Es soll aber darauf hingewiesen werden, dass dies nur eine illustrative Anwendungsart der erfindungsgemässen lösbaren Klebeverbindung ist; die Erfindung kann ebensogut dazu verwendet werden, eine lösbare Klebeverbindung zwischen zwei beliebigen Elementen herzustellen.

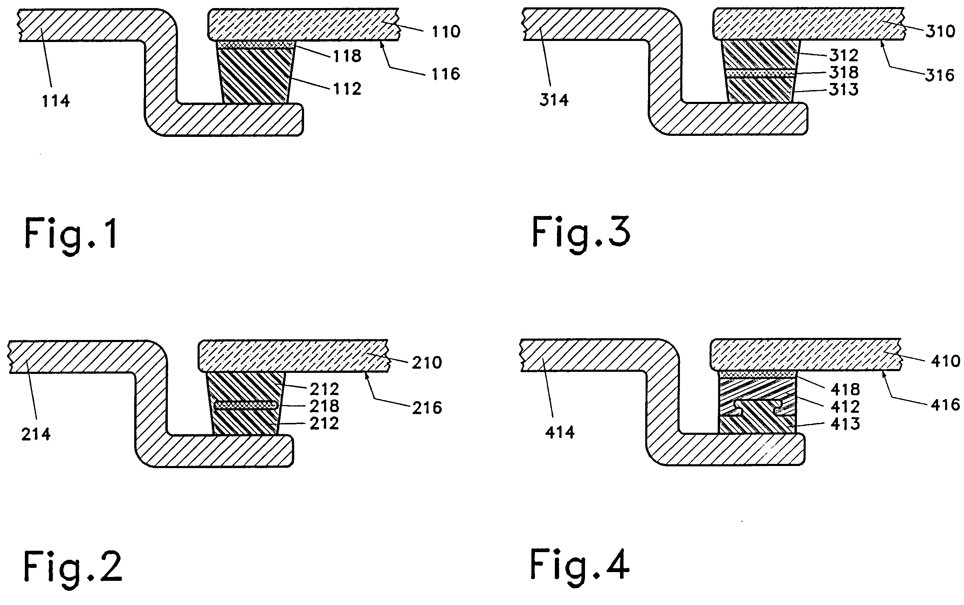

In der Fig. 1 ist ein Teilschnitt durch den Rahmenbereich 114 einer Fahrzeugkarosserie dargestellt. Im Rahmen 114 der Fahrzeugkarosserie ist eine Glasscheibe 110 lösbar eingeklebt. Zu diesem Zweck ist eine einzelne Kleberaupe 112 mit trapezförmigem Querschnitt vorgesehen. Zwischen der Kleberaupe 112 und der Oberfläche 116 der Glasscheibe 110 ist ein erhitzbares Trennelement 118 angeordnet, welches beispielsweise durch eine flächenförmige, dünne Kunststoffolie aus einem geeigneten Material, wie vorstehend erläutert, gebildet sein kann. Sofern das erhitzbare Trennelement 118 aus einem elektrisch leitfähigen Material besteht, ist die Folie mit (nicht dargestellten) Anschlussklemmen versehen, über welche sie an eine Stromquelle angeschlossen werden kann, um das Trennelement 118 zu erhitzen. Wenn das erhitzbare Trennelement 118 andererseits aus einem Kunststoffmaterial besteht, das unter der Einwirkung von Hochfrequenzstrahlung, Mikrowellenstrahlung oder Infrarotstrahlung erhitzbar ist, kann auf die Anschlussklemmen verzichtet werden.

Das erhitzbare Trennelement 118 liegt flächig sowohl an einem Kantenbereich der Oberfläche 116 der Glasscheibe 110 als auch an der der Glasscheibe 110 zugewandten Fläche der Kleberaupe 112 an. Wenn nun das erhitzbare Trennelement 118 aufgeheizt wird, geht die Haftung zwischen dem Trennelement 118 und der Kleberaupe 112 verloren und die Glasscheibe 110 kann ohne Mühe aus dem Rahmen 114 der Fahrzeugkarosserie entfernt werden. Nach dem Entfernen der Glasscheibe 110 zeigt es sich, dass die freiliegende Oberfläche der Kleberaupe 112 gleichmässig und eben ist, so dass diese nicht mehr nachbearbeitet werden muss, wenn eine neue Glasscheibe 110 eingeklebt wird.

In der Fig. 2 ist ein Teilschnitt durch den Rahmenbereich 214 einer Fahrzeugkarosserie dargestellt. Im Rahmen 214 der Fahrzeugkarosserie ist eine Glasscheibe 210 lösbar eingeklebt. Zu diesem Zweck ist eine einzelne Kleberaupe 212 mit trapezförmigem Querschnitt vorgesehen. Die Kleberaupe 212 liegt dabei direkt sowohl auf der Oberfläche 216 der Glasscheibe 210 als auch auf einem Randbereich des Fahrzeugrahmens 216 auf. Im Inneren der Kleberaupe 212 ist ein erhitzbares Trennelement 218 angeordnet, welches beispielsweise durch eine flächenförmige, dünne Kunststoffolie aus einem geeigneten Material, wie vorstehend erläutert, gebildet sein kann. Vorzugsweise werden die Kleberaupe 212 und das erhitzbares Trennelement 218 durch Koextrusion auf die Oberfläche 216 der Glasscheibe 210 aufgetragen.

Sofern das erhitzbare Trennelement 218 aus einem elektrisch leitfähigen Material besteht, ist die Folie mit (nicht dargestellten) Anschlussklemmen versehen, über welche sie an eine Stromquelle angeschlossen werden kann, um das Trennelement 218 zu erhitzen. Wenn das erhitzbare Trennelement 218 andererseits aus einem Kunststoffmaterial besteht, das unter der Einwirkung von Hochfrequenzstrahlung, Mikrowellenstrahlung oder Infrarotstrahlung erhitzbar ist, kann auf die Anschlussklemmen verzichtet werden.

Das erhitzbares Trennelement 218 liegt flächig sowohl an einem Oberteil als auch an einem Unterteil der Kleberaupe 212 an. Wenn nun das erhitzbare Trennelement 218 aufgeheizt wird, geht die Haftung zwischen dem Trennelement 218 und den Ober- sowie Unterteilen der Kleberaupe 212 verloren und die Glasscheibe 210 kann ohne Mühe aus dem Rahmen 214 der Fahrzeugkarosserie entfernt werden. Nach dem Entfernen der Glasscheibe 210 zeigt es sich, dass die freiliegende Oberfläche des unteren Teils der Kleberaupe 212 gleichmässig und eben ist, so dass sie nicht mehr nachbearbeitet werden muss, wenn eine neue Glasscheibe 210 eingeklebt wird.

In der Fig. 3 ist ein Teilschnitt durch den Rahmenbereich 314 einer Fahrzeugkarosserie dargestellt. Im Rahmen 314 der Fahrzeugkarosserie ist eine Glasscheibe 310 lösbar eingeklebt. Zu diesem Zweck ist eine erste Kleberaupe 312 und eine zweite Kleberaupe 313 vorgesehen, die zusammen trapezförmigen Querschnitt aufweisen. Zwischen der ersten Kleberaupe 312 und der zweiten Kleberaupe 313 ist ein erhitzbares Trennelement 318 angeordnet. Die erste Kleberaupe 312 liegt flächig einerseits auf der Oberfläche 316 der Glasscheibe 310 und andererseits auf der oberen Fläche des erhitzbaren Trennelements 318 an, und die zweite Kleberaupe 313 liegt flächig einerseits auf einem Kantenbereich des Fahrzeugrahmens 314 und andererseits auf der unteren Fläche des erhitzbaren Trennelementes 318 an. Letzteres kann beispielsweise durch eine flächenförmige, dünne Kunststoffolie aus einen geeigneten Material, wie vorstehend erläutert, gebildet sein. Sofern das erhitzbare Trennelement 318 aus einem elektrisch leitfähigen Material besteht, ist die Folie mit (nicht dargestellten) Anschlussklemmen versehen, über welche sie an eine Stromquelle angeschlossen werden kann, um das Trennelement 318 zu erhitzen. Wenn das erhitzbare Trennelement 318 andererseits aus einem Kunststoffmaterial besteht, das unter der Einwirkung von Hochfrequenzstrahlung, Mikrowellenstrahlung oder Infrarotstrahlung erhitzbar ist, kann auf die Anschlussklemmen verzichtet werden.

Wenn nun das erhitzbare Trennelement 318 aufgeheizt wird, geht die Haftung zwischen dem Trennelement 318 und der oberen Kleberaupe 312 bzw. der unteren Kleberaupe 313 verloren und die Glasscheibe 310 kann ohne Mühe aus dem Rahmen 314 der Fahrzeugkarosserie entfernt werden. Nach dem Entfernen der Glasscheibe 310 zeigt es sich, dass die freiliegende Oberfläche der am Rahmen 314 verbliebenen, unteren Kleberaupe 313 gleichmässig und eben ist, so dass diese nicht mehr nachbearbeitet werden muss, wenn eine neue Glasscheibe 310 eingeklebt wird.

In der Fig. 4 ist ein Teilschnitt durch den Rahmenbereich 414 einer Fahrzeugkarosserie dargestellt. Im Rahmen 414 der Fahrzeugkarosserie ist eine Glasscheibe 410 lösbar eingeklebt. Zu diesem Zweck sind zwei Kleberaupen 412 und 413 vorgesehen. Zwischen der Kleberaupe 412 und der Oberfläche 416 der Glasscheibe 410 ist ein erhitzbares Trennelement 418 angeordnet, welches beispielsweise durch eine flächenförmige, dünne Kunststoffolie aus einem geeigneten Material, wie vorstehend erläutert, gebildet sein kann. Die obere Kleberaupe 412 liegt dabei flächig auf dem erhitzbaren Trennelement 418 an, während die untere Kleberaupe 413 flächig auf einem Randbereich des Fahrzeugrahmens 414 anliegt.

Sofern das erhitzbare Trennelement 418 aus einem elektrisch leitfähigen Material besteht, ist die Folie mit (nicht dargestellten) Anschlussklemmen versehen, über welche sie an eine Stromquelle angeschlossen werden kann, um das Trennelement 418 zu erhitzen. Wenn das erhitzbare Trennelement 418 andererseits aus einem Kunststoffmaterial besteht, das unter der Einwirkung von Hochfrequenzstrahlung, Mikrowellenstrahlung oder Infrarotstrahlung erhitzbar ist, kann auf die Anschlussklemmen verzichtet werden.

Bei diesem Ausführungsbeispiel wird zunächst das erhitzbare Trennelement 418 auf die Oberfläche 416 der Glasscheibe 410 entlang deren Rand aufgebracht. Danach wird die erste Kleberaupe 412 auf die freie Oberfläche des Trennelements 418 aufgetragen und ausgehärtet. Nach der Aushärtung der ersten Kleberaupe 412 wird entweder der Rahmenbereich 414 oder die freie Oberfläche der ersten Kleberaupe 412 mit der zweiten Kleberaupe 413 versehen. Schliesslich wird die Scheibe 410 in den Rahmen 414 gepresst und festgehalten, bis auch die zweite Kleberaupe 413 erhärtet ist.

Das erhitzbare Trennelement 418 liegt, wie erwähnt, flächig sowohl auf einem Kantenbereich der Oberfläche 416 der Glasscheibe 410 als auch auf der der Glasscheibe 410 zugewandten Fläche der Kleberaupe 412 an. Wenn nun das erhitzbare Trennelement 418 aufgeheizt wird, geht die Haftung zwischen dem Trennelement 418 und der Kleberaupe 412 verloren und die Glasscheibe 410 kann ohne Mühe aus dem Rahmen 414 der Fahrzeugkarosserie entfernt werden. Nach dem Entfernen der Glasscheibe 410 zeigt es sich, dass die freiliegende Oberfläche der Kleberaupe 412 gleichmässig und eben ist, so dass diese nicht mehr nachbearbeitet werden muss, wenn eine neue Glasscheibe 410 eingeklebt wird.

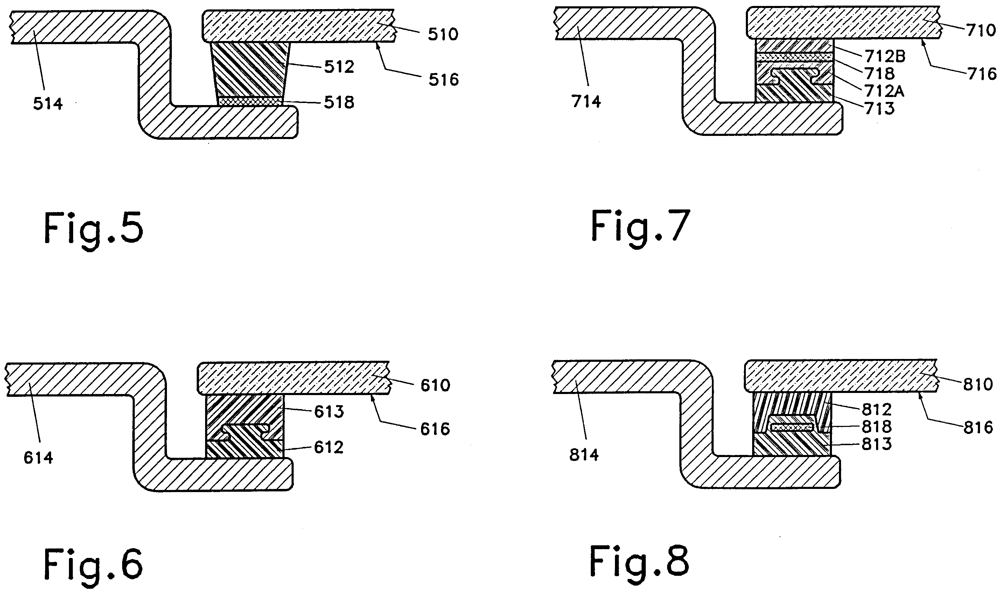

In der Fig. 5 ist eine Variante zum Ausführungsbeispiel gemäss Fig. 1 dargestellt. Im Rahmen 514 der Fahrzeugkarosserie ist eine Glasscheibe 510 lösbar eingeklebt. Zu diesem Zweck ist eine einzelne Kleberaupe 512 mit trapezförmigem Querschnitt vorgesehen. Zwischen der Kleberaupe 512 und der Oberfläche des Fahrzeugrahmens 514 ist ein erhitzbares Trennelement 518 angeordnet, welches beispielsweise durch eine flächenförmige, dünne Kunststoffolie aus einem geeigneten Material, wie vorstehend erläutert, gebildet sein kann. Sofern das erhitzbare Trennelement 518 aus einem elektrisch leitfähigen Material besteht, ist die Folie mit (nicht dargestellten) Anschlussklemmen versehen, über welche sie an eine Stromquelle angeschlossen werden kann, um das Trennelement 518 zu erhitzen. Wenn das erhitzbare Trennelement 518 andererseits aus einem Kunststoffmaterial besteht, das unter der Einwirkung von Hochfrequenzstrahlung, Mikrowellenstrahlung oder Infrarotstrahlung erhitzbar ist, kann auf die Anschlussklemmen verzichtet werden.

Das erhitzbare Trennelement 518 liegt flächig sowohl auf einem Kantenbereich des Fahrzeugrahmens 514 als auch auf der dem Rahmen 514 zugewandten Fläche der Kleberaupe 512 an. Wenn nun das erhitzbare Trennelement 518 aufgeheizt wird, geht die Haftung zwischen dem Trennelement 518 und der Kleberaupe 512 verloren und die Glasscheibe 510 kann ohne Mühe aus dem Rahmen 514 der Fahrzeugkarosserie entfernt werden.

In der Fig. 6 ist eine Variante zum Ausführungsbeispiel gemäss Fig. 4 dargestellt. Im Rahmen 614 der Fahrzeugkarosserie ist eine Glasscheibe 610 lösbar eingeklebt. Zu diesem Zweck sind zwei Kleberaupen 612 und 613 vorgesehen. Bei diesem Ausführungsbeispiel ist kein separates erhitzbares Trennelement vorgesehen. Vielmehr ist eine der beiden Kleberaupen 612 oder 613 aus einem geeigneten Material wie vorstehend erläutert hergestellt, vorzugsweise die Kleberaupe 612 welche flächig auf einem Randbereich des Fahrzeugrahmens 614 anliegt.

Sofern die erhitzbare Kleberaupe 612 aus einem elektrisch leitfähigen Material besteht, ist sie mit (nicht dargestellten) Anschlussklemmen versehen, über welche sie an eine Stromquelle angeschlossen werden kann, um sie zu erhitzen. Wenn die erhitzbare Kleberaupe 612 andererseits aus einem Kunststoffmaterial besteht, das unter der Einwirkung von Hochfrequenzstrahlung, Mikrowellenstrahlung oder Infrarotstrahlung erhitzbar ist, kann auf die Anschlussklemmen verzichtet werden.

Auch bei diesem Ausführungsbeispiel kann folgendermassen vorgegangen werden: Zunächst wird die Kleberaupe 613 auf die Oberfläche 616 der Glasscheibe 610 entlang deren Rand aufgebracht und ausgehärtet. Nach der Aushärtung der Kleberaupe 613 wird entweder der Rahmenbereich 614 oder die freie Oberfläche der ersten Kleberaupe 613 mit der zweiten Kleberaupe 612 versehen. Schliesslich wird die Scheibe 610 in den Rahmen 614 gepresst und festgehalten, bis auch die zweite Kleberaupe 612 erhärtet ist.

Wenn nun die erhitzbare Kleberaupe 612 aufgeheizt wird, geht die Haftung zwischen dem Fahrzeugrahmen 614 und der Kleberaupe 613 verloren und die Glasscheibe 610 kann ohne Mühe aus dem Rahmen 614 der Fahrzeugkarosserie entfernt werden.

Auch in der Fig. 7 ist eine weitere Variante zum Ausführungsbeispiel gemäss Fig. 4 dargestellt. Im Rahmen 714 der Fahrzeugkarosserie ist eine Glasscheibe 710 lösbar eingeklebt. Zu diesem Zweck sind zwei Kleberaupen 712 und 713 vorgesehen. Die Kleberaupe 712 besteht aus einem oberen Teil 712B und einem unteren Teil 712A. Zwischen diese Teile 712A und 712B ist ein erhitzbares Trennelement 718 eingefügt, welches aus einem geeigneten Material wie vorstehend erläutert hergestellt ist.

Sofern das erhitzbare Trennelement 718 aus einem elektrisch leitfähigen Material besteht, ist es mit (nicht dargestellten) Anschlussklemmen versehen, über welche es an eine Stromquelle angeschlossen werden kann, um es zu erhitzen. Wenn das erhitzbare Trennelement 718 andererseits aus einem Kunststoffmaterial besteht, das unter der Einwirkung von Hochfrequenzstrahlung, Mikrowellenstrahlung oder Infrarotstrahlung erhitzbar ist, kann auf die Anschlussklemmen verzichtet werden.

Auch bei diesem Ausführungsbeispiel kann folgendermassen vorgegangen werden: Zunächst wird die Kleberaupe 712 auf die Oberfläche 716 der Glasscheibe 710 entlang deren Rand aufgebracht, vorzugsweise durch Koextrusion der beiden Teile 712A und 712B sowie des erhitzbaren Trennelementes 718, und ausgehärtet. Nach der Aushärtung der Kleberaupe 712 wird entweder der Rahmenbereich 714 oder die freie Oberfläche der ersten Kleberaupe 712 mit der zweiten Kleberaupe 713 versehen. Schliesslich wird die Scheibe 710 in den Rahmen 714 gepresst und festgehalten, bis auch die zweite Kleberaupe 713 erhärtet ist.

Wenn nun das erhitzbare Trennelement 718 aufgeheizt wird, geht die Haftung zwischen den beiden Teilen 712A und 712B der Kleberaupe 712 verloren und die Glasscheibe 710 kann ohne Mühe aus dem Rahmen 714 der Fahrzeugkarosserie entfernt werden. Nach dem Entfernen der Glasscheibe 710 zeigt es sich, dass die freiliegende Oberfläche des Teils 712A der Kleberaupe 712 gleichmässig und eben ist, so dass diese nicht mehr nachbearbeitet werden muss, wenn eine neue Glasscheibe 710 eingeklebt wird.

Schliesslich ist in der Fig. 8 eine weiter Variante zum Ausführungsbeispiel gemäss Fig. 4 dargestellt. Im Rahmen 814 der Fahrzeugkarosserie ist eine Glasscheibe 810 lösbar eingeklebt.

Zu diesem Zweck sind zwei Kleberaupen 812 und 813 vorgesehen. Im Inneren der Kleberaupe 813, welche flächig auf dem Randbereich des Fahrzeugrahmens 814 anliegt, ist ein erhitzbares Trennelement 818 eingebettet, welches aus einem geeigneten Material, wie vorstehend erläutert, hergestellt ist.

Sofern das erhitzbare Trennelement 818 aus einem elektrisch leitfähigen Material besteht, ist es mit (nicht dargestellten) Anschlussklemmen versehen, über welche es an eine Stromquelle angeschlossen werden kann, um es zu erhitzen. Wenn das erhitzbare Trennelement 818 andererseits aus einem Kunststoffmaterial besteht, das unter der Einwirkung von Hochfrequenzstrahlung, Mikrowellenstrahlung oder Infrarotstrahlung erhitzbar ist, kann auf die Anschlussklemmen verzichtet werden.

Wenn das erhitzbare Trennelement 818 aufgeheizt wird, geht die Haftung zwischen den beiden Kleberaupen 812 und 813 verloren und, da diese beiden Kleberaupen nurmehr über zwei schmale Stege beidseits des erhitzbaren Trennelementes 818 miteinander verbunden sind, kann die Glasscheibe 810 ohne Mühe aus dem Rahmen 814 der Fahrzeugkarosserie entfernt werden.

### Anwendungsbeispiele

Die Anwendungsbeispiele beschreiben Aufheizversuche mit leitfähigen Polymer-Folien.

### Beispiel 1

- Folienmaterial:: "PE 105 LF", ein mit Russ leitfähig gemachtes Polyethylen der Firma Zipperling Kessler & Co., D-17255 Ahrensberg, Deutschland
- Spezifischer Durchgangswiderstand:: 0,5 Ohm·cm, entsprechend einer Leitfähigkeit von 2 S/cm

| | | | |
|---|---|---|---|
| Bandlänge: | 4 m | 2 m | 1 m |
| Bandbreite: | 10 mm | 10 mm | 10 mm |
| Banddicke: | 1 mm | 1 mm | 1 mm |
| Frequenz: | 50 Hz | 50 Hz | 50 Hz |

| Messwerte zu Beginn: | | | |
|---|---|---|---|
| Spannung (AC): | 260 V | 260 V | 260 V |
| Widerstand: | 3,2 kOhm | 1,9 kOhm | 0,94 kOhm |
| Leistungsaufnahme: | 21,13 W | 35,58 W | 71,91 W |
| Erwärmung auf (Start 30 °C): | 40 °C | 55 °C | 100 °C |
| Aufheizzeit: | 5 min | 5 min | 3,5 min¹⁾ |

| Messwerte nach 5 min: | | | |
|---|---|---|---|
| Spannung (AC): | 260 V | 260 V | 260 V |
| Widerstand: | 3,3 kOhm | 2,1 kOhm | 1,7 kOhm |
| Leistungsaufnahme: | 20,48 W | 32,19 W | 39,76 W |

| | | | |
|---|---|---|---|
| 1) Wird nach 2 min weich, nach 3 min klebrig; Abbruch nach 3,5 min | | | |

### Beispiel 2

- Folienmaterial:: "Primacor 5980", ein Ethylen-Acrylsäure-Copolymer der Firma The Dow Chemical Company, Midland, MI 48674, USA, mit Leitfähigkeitszusätzen aus 20 Gew.-% Russ und aus 5 Gew.-% nickelbeschichteten Polyacrylnitrilfasern (Versuchsproduktt der Firma Texmet, I-28100 Novara, Italien)
- Spezifischer Durchgangswiderstand:: 0,1 Ohm·cm, entsprechend einer Leitfähigkeit von 10 S/cm

| | | | |
|---|---|---|---|
| Bandlänge: | 4 m | 2 m | 1 m |
| Bandbreite: | 10 mm | 10 mm | 10 mm |
| Banddicke: | 2 mm | 2 mm | 2 mm |
| Frequenz: | 50 Hz | 50 Hz | 50 Hz |

| Messwerte zu Beginn: | | | |
|---|---|---|---|
| Spannung (AC): | 260 V | 260 V | 260 V |
| Widerstand: | 0,35 kOhm | 0,20 kOhm | 0,12 kOhm |
| Leistungsaufnahme: | 195 W | 340 W | 560 W |
| Erwärmung auf (Start 30 °C): | >100 °C | >100 °C | >100 °C |
| Aufheizzeit: | 2 min¹⁾ | 1 min¹⁾ | 0,5 min¹⁾ |

| | | | |
|---|---|---|---|
| 1) Aufheizung abgebrochen, da Polymer geschmolzen | | | |

## Patentansprüche

1. Lösbare Klebeverbindung, bei welcher die Verbindung der beiden miteinander verbundenen Teile (110, 114; 210, 214; 310, 314; 410, 414; 510, 514; 610, 614; 710, 714; 810, 814) mittels mindestens einer dazwischen eingebrachten Kleberaupe (112; 212; 312, 313; 412, 413; 512; 612, 613; 712A, 712B, 713; 812, 813) bewerkstelligt ist, und welche mittels eines erhitzbaren polymeren Trennelementes lösbar ist, dadurch gekennzeichnet, dass ein separates, durch Strom- oder Strahlungszufuhr erhitzbares thermoplastisches Trennelement (118; 218; 318; 418; 518; 612; 718; 818) an oder in der Kleberaupe (112; 212; 512) bzw. einer der Kleberaupen (418; 712A, 712B; 813) vorgesehen ist oder dass eine der Kleberaupen selbst (612) als solches ausgebildet ist, wobei das Trennelement beim Erhitzen bei einer Temperatur, bei welcher die betreffende Kleberaupe (112, 212, 418, 512, 612, 712A, 712B, 812) noch nicht geschädigt wird, die Haftung an den anliegenden Teilen der Verbindung verliert oder zerstört wird und dabei die anliegenden Teile der betreffenden Kleberaupe (112, 212, 418, 512, 612, 712A, 712B, 812) freigibt, so dass die betreffende Kleberaupe nach dem Lösen für ein Wiederverkleben des mit dieser verbundenen gebliebenen Teiles (114; 214; 314; 414; 510; 610; 714; 814) brauchbar bleibt, und wobei das thermoplastische Trennelement aus einem Material besteht, das aus der folgenden Gruppe ausgewählt ist:
- Polyolefine, insbesondere Polyethylene, ataktische Polypropylene, Polybutene und deren Copolymere;
- Ethylen-Vinylacetat-Copolymere;
- Ethylen-Acrylsäure-Copolymere;
- Ethylen-Methacrylsäure-Copolymere und entsprechende Metallsalze;
- gepfropfte und/oder segmentierte Ethylen-Vinylacetat-Copolymere;
- Ethylen-Propylen-Dien-Copolymere;
- thermoplastische Polyurethane;
- gesättigte Polyester und Copolyester;
- Polyamide und Copolyamide;
- Polyacrylate und Polymethacrylate; und
- Triblock- oder Biblock-Copolymere, insbesondere aus Polyamid-, Polyester- und/oder Polyether-Blöcken oder Polystyrol-, Polybutadien- und Polyisobutylen-Blöcken.

2. Lösbare Klebeverbindung nach Anspruch 1, dadurch gekennzeichnet, dass das erhitzbare Trennelement (118; 418; 518) an einem (110; 410; 514) der mittels der Kleberaupe bzw. Kleberaupen (112; 412, 413; 512) verbundenen Teile (110; 114; 410, 414; 510; 514) angeordnet ist (Fig. 1, 4, 5).

3. Lösbare Klebeverbindung nach Anspruch 1, dadurch gekennzeichnet, dass das erhitzbare Trennelement (218; 318; 718; 818) im Innern der Kleberaupe bzw. eines der Kleberaupen (212; 712A, 712B; 813) oder zwischen zwei Kleberaupen (312, 313) angeordnet ist (Fig. 2, 3, 7, 8).

4. Lösbare Klebeverbindung nach einem oder mehreren der Ansprüche 1 bis 3, dadurch gekennzeichnet, dass das erhitzbare Trennelement (118; 218; 318; 418; 518; 718; 818) flächenförmig ausgebildet ist (Fig. 1 bis 5, 7, 8).

5. Lösbare Klebeverbindung nach Anspruch 4, dadurch gekennzeichnet, dass das erhitzbare Trennelement (118; 218; 318; 418; 518; 718; 818) eine thermoplastische Schicht insbesondere eine thermoplastische Folie, ist (Fig. 1 bis 5, 7, 8).

6. Lösbare Klebeverbindung nach Anspruch 5, dadurch gekennzeichnet, dass die thermoplastische Schicht (118; 218; 318; 418; 518; 718; 818) elektrisch leitend ist, so dass deren Erhitzung durch Stromzufuhr erfolgen kann, wobei die thermoplastische Schicht als Leitfähigkeitszusätze enthält:
- intrinsisch leitfähige Polymere;
- elektrisch leitfähige Russe; oder
- Graphit; oder
- Metallpulver, Metallfasern oder Metallnadeln, insbesondere aus Aluminium, Kupfer, Silber oder Wolfram; oder
- mit Metallen, insbesondere Aluminium, Kupfer, Silber oder Wolfram, beschichtete Füllstoffe, insbesondere metallbeschichtete Mikroglaskugeln und metallbeschichtete Textilfasern; oder
- Gemische dieser Materialien.

7. Lösbare Klebeverbindung nach Anspruch 6, dadurch gekennzeichnet, dass sie als intrinsisch leitfähiges Polymer Polyanilin oder ein Gemisch aus Polyanilin und Polyvinylchlorid enthält.

8. Lösbare Klebeverbindung nach Anspruch 6, dadurch gekennzeichnet, dass sie als metallbeschichtete Füllstoffe metallbeschichtete Mikroglaskugeln oder metallbeschichtete Textilfasern enthält.

9. Lösbare Klebeverbindung nach Anspruch 8, dadurch gekennzeichnet, dass sie als metallbeschichtete Textilfasern metallbeschichtete Polyacrylonitril-Fasern enthält.

10. Lösbare Klebeverbindung nach Anspruch 5, dadurch gekennzeichnet, dass das erhitzbare Trennelement (118; 218; 318; 418; 518; 718; 818) eine mittels Hochferquenzstrahlung erhitzbare Folie ist.

11. Lösbare Klebeverbindung nach Anspruch 5, dadurch gekennzeichnet, dass das erhitzbare Trennelement (118; 218; 318; 418; 518; 718; 818) eine mittels Mikrowellenstrahlung erhitzbare Folie ist.

12. Lösbare Klebeverbindung nach Anspruch 5, dadurch gekennzeichnet, dass das erhitzbare Trennelement (118; 218; 318; 418; 518; 718; 818) eine mittels Infrarotstrahlung erhitzbare Folie ist.

13. Lösbare Klebeverbindung nach einem der Ansprüche 1 bis 12, dadurch gekennzeichnet, dass sie zwei Kleberaupen (612, 613) aufweist, von denen die eine (612) selbst als erhitzbares Trennelement ausgebildet ist, welches beim Erhitzen bei einer Temperatur, bei welcher die andere Kleberaupe (613) noch nicht geschädigt wird, die Haftung an den anliegenden Teilen (610) der Verbindung verliert oder zerstört wird und dabei die andere Kleberaupe freigibt (Fig. 6).

14. Verfahren zur Herstellung einer lösbaren Klebeverbindung, bei welcher die Verbindung der beiden miteinander verbundenen Teile (110, 114; 210, 214; 310, 314; 410, 414; 510, 514; 610, 614; 710, 714; 810, 814) mittels mindestens einer dazwischen eingebrachten Kleberaupe (112; 212; 312, 313; 412, 413; 512; 612, 613; 712A, 712B, 713; 812, 813) erfolgt, und welche mittels eines erhitzbaren polymeren Trennelementes lösbar ist, dadurch gekennzeichnet, dass ein separates, durch Strom- oder Strahlungszufuhr erhitzbares thermoplastisches Trennelement (118; 218; 318; 418; 518; 612; 718; 818) an oder in der Kleberaupe (112; 212; 512) bzw. einer der Kleberaupen (418; 712A, 712B; 813) angeordnet wird oder dass eine der Kleberaupen selbst (612) als solches ausgebildet wird, wobei das Trennelement beim Erhitzen bei einer Temperatur, bei welcher die betreffende Kleberaupe (112, 212, 418, 512, 612, 712A, 712B, 812) noch nicht geschädigt wird, die Haftung an den anliegenden Teilen der Verbindung verliert oder zerstört wird und dabei die anliegenden Teile der betreffenden Kleberaupe (112, 212, 418, 512, 612, 712A, 712B, 812) freigibt, so dass die betreffende Kleberaupe nach dem Lösen für ein Wiederverkleben des mit dieser verbundenen gebliebenen Teiles (114; 214; 314; 414; 510; 610; 714; 814) brauchbar bleibt, und wobei das thermoplastische Trennelement aus einem Material besteht, das aus der folgenden Gruppe ausgewählt ist:
- Polyolefine, insbesondere Polyethylene, ataktische Polypropylene, Polybutene und deren Copolymere;
- Ethylen-Vinylacetat-Copolymere;
- Ethylen-Acrylsäure-Copolymere;
- Ethylen-Methacrylsäure-Copolymere und entsprechende Metallsalze;
- gepfropfte und/oder segmentierte Ethylen-Vinylacetat-Copolymere;
- Ethylen-Propylen-Dien-Copolymere;
- thermoplastische Polyurethane;
- gesättigte Polyester und Copolyester;
- Polyamide und Copolyamide;
- Polyacrylate und Polymethacrylate; und
- Triblock- oder Biblock-Copolymere, insbesondere aus Polyamid-, Polyester- und/oder Polyether-Blöcken oder Polystyrol-, Polybutadien- und Polyisobutylen-Blöcken.

15. Verfahren nach Anspruch 14, dadurch gekennzeichnet, dass das erhitzbare Trennelement (118; 418; 518) vor dem Aufbringen der Kleberaupe bzw. Kleberaupen (112; 412,.413; 512) auf die zu verbindenden Teile (110; 114; 410, 414; 510; 514) an einem dieser Teile (110; 410; 514) angebracht wird (Fig. 1, 4, 5).

16. Verfahren nach Anspruch 14, dadurch gekennzeichnet, dass das erhitzbare Trennelement (218; 318; 718; 818) vor dem Aufbringen der Kleberaupe bzw. Kleberaupen (212; 312, 313; 712A, 712B, 713; 812, 813) auf die zu verbindenden Teile (210, 214; 310, 314; 710, 714; 810, 814) ins Innere der Kleberaupe bzw. einer der Kleberaupen (212; 712A, 712B; 813) oder zwischen zwei Kleberaupen (312, 313) eingebracht wird (Fig. 2, 3, 7, 8).

17. Verfahren nach Anspruch 14, dadurch gekennzeichnet, dass das Einbringen des erhitzbaren Trennelementes (218; 318; 718; 818) ins Innere der Kleberaupe bzw. einer der Kleberaupen (212; 712A, 712B; 813) oder zwischen zwei Kleberaupen (312, 313) durch Koextrusion mit derselben bzw. denselben erfolgt.

18. Verfahren nach einem oder mehreren der Ansprüche 14 bis 17, dadurch gekennzeichnet, dass das erhitzbare Trennelement (118; 218; 318; 418; 518; 718; 818) flächenförmig ausgebildet ist (Fig. 1 bis 5, 7, 8).

19. Verfahren nach Anspruch 18, dadurch gekennzeichnet, dass das erhitzbare Trennelement (118; 218; 318; 418; 518; 718; 818) eine thermoplastische Schicht insbesondere eine thermoplastische Folie, ist (Fig. 1 bis 5, 7, 8).

20. Verfahren nach Anspruch 19, dadurch gekennzeichnet, dass die thermoplastische Schicht (118; 218; 318; 418; 518; 718; 818) elektrisch leitend ist, so dass deren Erhitzung durch Stromzufuhr erfolgen kann, wobei die thermoplastische Schicht als Leitfähigkeitszusätze enthält:
- intrinsisch leitfähige Polymere;
- elektrisch leitfähige Russe; oder
- Graphit; oder
- Metallpulver, Metallfasern oder Metallnadeln, insbesondere aus Aluminium, Kupfer, Silber oder Wolfram; oder
- mit Metallen, insbesondere Aluminium, Kupfer, Silber oder Wolfram, beschichtete Füllstoffe, insbesondere metallbeschichtete Mikroglaskugeln und metallbeschichtete Textilfasern; oder
- Gemische dieser Materialien.

21. Verfahren nach Anspruch 20, dadurch gekennzeichnet, dass die thermoplastische Schicht (118; 218; 318; 418; 518; 718; 818) als intrinsisch leitfähiges Polymer Polyanilin oder ein Gemisch aus Polyanilin und Polyvinylchlorid enthält.

22. Verfahren nach Anspruch 20, dadurch gekennzeichnet, dass sie als metallbeschichtete Füllstoffe metallbeschichtete Mikroglaskugeln oder metallbeschichtete Textilfasern enthält.

23. Verfahren nach Anspruch 20, dadurch gekennzeichnet, dass sie als metallbeschichtete Textilfasern metallbeschichtete Polyacrylonitril-Fasern enthält.

24. Verfahren nach Anspruch 19, dadurch gekennzeichnet, dass das erhitzbare Trennelement (118; 218; 318; 418; 518; 718; 818) eine mittels Hochfrequenzstrahlung erhitzbare Folie ist.

25. Verfahren nach Anspruch 19, dadurch gekennzeichnet, dass das erhitzbare Trennelement (118; 218; 318; 418; 518; 718; 818) eine mittels Mikrowellenstrahlung erhitzbare Folie ist.

26. Verfahren nach Anspruch 19, dadurch gekennzeichnet, dass das erhitzbare Trennelement (118; 218; 318; 418; 518; 718; 818) eine mittels Infrarotstrahlung erhitzbare Folie ist.

27. Verfahren nach einem oder mehreren der Ansprüche 14 bis 26 zur Herstellung einer lösbaren Klebeverbindung, welche zwei Kleberaupen (612, 613) aufweist, dadurch gekennzeichnet, dass die eine Kleberaupe (612) selbst als erhitzbares thermoplastisches Trennelement ausbildet wird, welches beim Erhitzen bei einer Temperatur, bei welcher die andere Kleberaupe (613) noch nicht geschädigt wird, die Haftung an den anliegenden Teilen (610) der Verbindung verliert oder zerstört wird und dabei die andere Kleberaupe (613) freigibt (Fig. 6).

28. Verwendung von Hochfrequenzstrahlern zum Trennen von lösbaren Klebeverbindungen nach Anspruch 10.

29. Verwendung von Mikrowellenstrahlern zum Trennen von lösbaren Klebeverbindungen nach Anspruch 11.

30. Verwendung von Infrarotstrahlern zum Trennen von lösbaren Klebeverbindungen nach Anspruch 12.

31. Verwendung von Infrarotlasern nach Anspruch 30.

## Claims

1. Detachable adhesive joint in which the joining of the two parts joined to each other (110, 114; 210, 214; 310, 314; 410, 414; 510, 514; 610, 614; 710, 714; 810, 814) is contrived by means of at least one strand of adhesive introduced between them (112; 212; 312, 313; 412, 413; 512; 612, 613; 712A, 712B, 713; 812, 813), and which can be released by means of a heatable polymer separating element, characterized in that a separate, thermoplastic separating element which can be heated by feeding current or radiation (118; 218; 318; 418; 518; 612; 813) is provided on or in the strand of adhesive (112; 212; 512) or one of the strands of adhesive (418; 712A, 712B; 813) or that one of the strands of adhesive itself (612) is designed as such, the separating element, when heated at a temperature at which the relevant strand of adhesive (112, 212, 418, 512, 612, 712A, 712B, 812) is not yet damaged, the adhesion on the adjacent parts of the joint being lost or destroyed and, in this case, releasing the adjacent parts of the relevant strand of adhesive (112, 212, 418, 512, 612, 712A, 712B, 812), so that the relevant strand of adhesive remains usable after the release for a re-bonding of the part remaining joined to the latter (114; 214; 314; 414; 510; 610; 714; 814), and where the thermoplastic separating element comprises a material that has been selected from the following group:
- polyolefins, especially polyethylenes, atactic polypropylenes, polybutenes and their copolymers;
- ethylene-vinylacetate copolymers;
- ethylene-acrylic acid copolymers;
- ethylene-methacrylic acid copolymers and corresponding metal salts;
- grafted and/or segmented ethylene-vinylacetate-copolymers;
- ethylene-propylene-diene-copolymers;
- thermoplastics polyurethanes;
- saturated polyesters and copolyesters;
- polyamides and copolyamides;
- polyacrylates and polymethacrylates; and
triblock or biblock copolymers, especially of polyamido-, polyester- and/or polyether blocks or polystyrene-, polybutadiene- and polyisobutylene blocks.

2. Detachable adhesive joint according to Claim 1, characterized in that the heatable separating element (118; 418; 518) is located on one (110; 410; 514) of the parts (110; 114; 410, 414; 510; 514) joined by means of the strand or strands of adhesive (112; 412, 413; 512) (Figs. 1, 4, 5).

3. Detachable adhesive joint according to Claim 1, characterized in that the heatable separating element (218; 318; 718; 818) is located in the interior of the strand of adhesive or of one of the strands of adhesive (212; 712A, 712B; 813) or between two strands of adhesive (312, 313) (Figs. 2, 3, 7, 8).

4. Detachable adhesive joint according to one or more of Claims 1 to 3, characterized in that the heatable separating element (118; 218; 318; 418; 518; 718; 818) is constructed flat in shape (Figs. 1 to 5, 7, 8).

5. Detachable adhesive joint according to Claim 4, characterized in that the heatable separating element (118; 218; 318; 418; 518; 718; 818;) is a thermoplastic layer, especially a thermoplastic film (Figs. 1 to 5, 7, 8).

6. Detachable adhesive joint according to Claim 5, characterized in that the thermoplastic layer (118; 218; 318; 418; 518; 718; 818) is electrically conductive, so that its heating can be carried out by feeding current, where the thermoplastic layer contains, as conductive additives:
- intrinsically conductive polymers;
- electrically conductive carbon blacks; or
- graphite; or
- metal powder, metal fibres, or metal needles, especially of aluminium, copper, silver or tungsten;
or with fillers coated with metals, especially aluminium, copper, silver or tungsten, especially metal-coated microglass spheres or metal-coated textile fibres; or
- mixtures of these materials.

7. Detachable adhesive joint according to Claim 6, characterized in that it contains, as an intrinsically conductive polymer, polyaniline or a mixture of plyaniline and polyvinylchloride.

8. Detachable adhesive joint according to Claim 6, characterized in that it contains metal-coated microglass spheres or metal coated textile fibres as metal-coated fillers.

9. Detachable adhesive joint according to Claim 8, characterized in that it contains metal-coated polyacrylonitrile fibres as metal-coated textile fibres.

10. Detachable adhesive joint according to Claim 5, characterized in that the heatable separating element (118; 218; 318; 418; 518; 718; 818) is a film which can be heated by means of high-frequency radiation.

11. Detachable adhesive joint according to Claim 5, characterized in that the heatable separating element (118; 218; 318; 418; 518; 718; 818) is a film which can be heated by means of microwave radiation.

12. Detachable adhesive joint according to Claim 5, characterized in that the heatable separating element (118; 218; 318; 418; 518; 718; 818) is a film which can be heated by means of infrared radiation.

13. Detachable adhesive joint according to one of Claims 1 to 12, characterized in that it has two strands of adhesive (612, 613), one of which (612) is itself designed as a heatable separating element which, when heated at a temperature at which the other strand of adhesive (613) is not yet damaged, the adhesion on the adjacent parts (610) of the joint being lost or destroyed and during this releasing the other strand of adhesive (Fig. 6).

14. Method for producing a detachable adhesive joint in which the joining of the two parts joined to each other (110, 114; 210, 214; 310, 314; 410, 414; 510, 514; 610, 614; 710, 714; 810, 814;) is made by means of at least one strand of adhesive (112; 212; 312, 313; 412, 413; 512; 612, 613; 712A, 712B, 713; 812, 813) introduced between them, and which can be detached by means of a heatable polymer separating element, characterized in that a separate thermoplastic separating element, heatable by supplying current or radiation (118; 218; 318; 418; 518; 612; 718; 818) is located on or in the strand of adhesive (112; 212; 512) or one of the strands of adhesive (418; 712A, 712B; 813), or that one of the strands of adhesive is itself (612) designed as such, where the separating element, when heated at a temperature at which the relevant strand of adhesive (112, 212, 418, 512, 612, 712A, 712B, 812) is not yet damaged, loses adhesion to the adjacent parts of the joint or is detroyed and during this releases the adjacent parts of the strand of adhesive concerned (112, 212, 418, 512, 612, 712A, 712B, 812), so that the relevant strand of adhesive remains usable after the release for a re-bonding of the part which remains joined to this (114; 214; 314; 414; 510; 610; 714; 814), and where the thermoplastic separating element comprises a material which is selected from the following group:
- polyolefins, especially polyethylenes, atactic polypropylenes, polybutenes and their copolymers;
- ethylene-vinylacetate-copolymers;
- ethylene-acrylic acid copolymers;
- ethylene-metnacrylate acid-copolymers and corresponding metal salts;
- grafted and/or segmented ethylene-vinylacetate copolymers;
- ethylene-propylene-diene copolymers;
- thermoplastics polyurethanes;
- saturated polyesters and copolyesters;
- polyamides and copolyamides;
- polyacrylates and polymethacrylates; and
- triblock or biblock copolymers, especially of polyamide-, polyester- and/or polyether block or polystyrene-, polybutadiene- and polyisobutylene blocks.

15. Method according to Claim 14, characterized in that the heatable separating element (118; 418; 518) is applied before the application of the strand or strands of adhesive (112; 412, 413; 512) onto the parts to be joined (110; 114; 410, 414; 510; 514) on one of these parts (110; 410; 514) (Figs. 1, 4, 5).

16. Method according to Claim 14, characterized in that the heatable separating element (218; 318; 718; 818) is introduced before the application of the strand or strands of adhesive (212; 312, 313; 712A, 712B, 713; 812, 813) onto the parts to be joined (210, 214; 310, 314; 710, 714; 810, 814) into the inside of the strand of adhesive or one of the strands of adhesive (312, 313) (Figs. 2, 3, 7, 8).

17. Method according to Claim 14, characterized in that the introduction of the heatable separating element (218; 318; 718; 818) into the inside of the strand of adhesive or of one of the strands of adhesive (212; 712A, 712B; 813) or between the two strands of adhesive (312, 313) takes place by co-extrusion with the same.

18. Method according to one or more of Claims 14 to 17, characterized in that the heatable separating element (118; 218; 318; 418; 518; 718; 818) is designed in a flat shape (Figs. 1 to 5, 7, 8).

19. Method according to Claim 18, characterized in that the heatable separating element (118; 218; 318; 418; 518; 718; 818) is a thermoplastic layer, especially a thermoplastic film (Figs. 1 to 5, 7, 8).

20. Method according to Claim 19, characterized in that the thermoplastic layer (118; 218; 318; 418; 518; 718; 818) is electrically conductive, so that it can be heated by the supply of current, the thermoplastic layer containing, as conductive additives:
- intrinsically conductive polymers;
- electrically conductive carbon blacks; or
- graphite, or
- metal powder, metal fibres or metal needles, especially of aluminium, copper, silver or tungsten; or
- filers coated with metals, especially aluminium, copper, silver or tungsten, especially metal-coated microglass spheres and metal-coated textile fibres; or
- mixtures of these materials.

21. Method according to Claim 20, characterized in that the thermoplastic layer (118; 218; 318; 418; 518; 718; 818) contains polyaniline or a mixture of polyaniline and polyvinylchloride as an intrinsically conductive polymer.

22. Method according to Claim 20, characterized in that it contains metal-coated microglass spheres or metal-coated textile fibres as metal-coated fillers.

23. Method according to Claim 20, characterized in that it contains metal-coated polyacrylonitrile fibres as metal-coated textile fibres.

24. Method according to Claim 19, characterized in that the heatable separating element (118; 218; 318; 418; 518; 718; 818) is a film which can be heated by means of high-frequency radiation.

25. Method according to Claim 19, characterized in that the heatable separating element (118; 218; 318; 418; 518; 718; 818) is a film which can be heated by means of microwave radiation.

26. Method according to Claim 19, characterized in that the heatable separating element (118; 218; 318; 418; 518; 718; 818) is a film which can be heated by means of infrared radiation.

27. Method according to one or more of Claims 14 to 26 for the production of a detachable adhesive joint which has two strands of adhesive (612, 613), characterized in that one strand of adhesive (612) is itself designed as a heatable thermoplastic separating element which, when heated at a temperature at which the other strand of adhesive (613) is not yet damaged, the adhesion on the adjacent parts (610) of the joint being lost or destroyed during this, the other strand of adhesive (613) being released (Fig. 6).

28. Use of high-frequency radiators for the separation of detachable adhesive joints according to Claim 10.

29. Use of microwave radiators for the separation of detachable adhesive joints according to Claim 11.

30. Use of infrared radiators for the separation of detachable adhesive joints according to Claim 12.

31. Use of infrared lasers according to Claim 30.

## Revendications

1. Assemblage collé détachable, sur lequel la jonction des parties reliées entre elles (110, 114; 210, 214; 310, 314; 410, 414; 510, 514; 610, 614; 710, 714; 810, 814) est réalisée au moyen d'au moins un cordon de collage intercalé (112; 212; 312; 313; 412; 413; 512; 612; 612; 613; 712A, 712B, 713; 812, 813), et qui est détachable au moyen d'un élément séparateur polymère pouvant être réchauffé, caractérisé en ce qu'un élément séparateur thermoplastique (118; 218; 318; 418; 518; 612; 718; 818), séparé et pouvant être réchauffé par l'arrivée de courant ou de rayonnement est prévu sur ou dans le cordon de collage (112; 212; 512) ou l'un des cordons de collage (418; 712A, 712B; 813) ou en ce que l'un des cordons de collage (612) est conçu comme tel, l'élément séparateur perdant ou détruisant l'adhérence sur les parties jointes de l'assemblage lors du réchauffement à une température à laquelle le cordon de collage concerné (112, 212, 418, 512, 612, 712A, 712B, 812) n'est pas encore endommagé, et libérant alors les parties jointes du cordon de collage concerné (112, 212, 418, 512, 612, 712A, 712B, 812), de sorte que le cordon de collage concerné reste utilisable après le décollage pour un recollage de la pièce restée reliée (114; 214; 314; 414; 510; 610; 714; 814), et l'élément séparateur thermoplastique étant à base d'un matériau qui est sélectionné dans le groupe suivant :
- polyoléfines, en particulier polyéthylènes, polypropylènes atac tiques, polybutènes et leurs copolymères ;
- copolymères éthylène-acétate de vinyle ;
- copolymères éthylène-acide acrylique ;
- copolymères éthylène-acide méthacrylique et sels métalliques correspondants ;
- copolymères éthylène-acétate de vinyle greffés et/ou segmentés;
- copolymères éthylène-propylène-diène ;
- polyuréthanes thermoplastiques ;
- polyesters et copolyesters saturés ;
- polyamides et copolyamides ;
- polyacrylates et polyméthacrylates ; et
- copolymères tribloc ou bibloc, en particulier à base de blocs de polyamide, de polyester et/ou de polyéther ou de blocs de polystyrène, de polybutadiène et de polyisobutylène.

2. Assemblage collé détachable selon la revendication 1, caractérisé en ce que l'élément séparateur pouvant être réchauffé (118; 418; 518) est disposé (figures 1, 4, 5) sur l'une des pièces (110; 114; 410; 414; 510; 514) reliées au moyen du cordon de collage ou des cordons de collage (112; 412, 413; 512) (fig. 1, 4, 5).

3. Assemblage collé détachable selon la revendication 1, caractérisé en ce que l'élément séparateur (218; 318; 718; 818) pouvant être réchauffé est disposé (figures 2, 3, 7, 8) à l'intérieur du cordon de collage ou de l'un des cordons de collage (212; 712A, 712B; 813) ou entre deux cordons de collage (312, 313) (fig. 2, 3, 7, 8).

4. Assemblage collé détachable selon l'une quelconque ou plusieurs des revendications 1 à 3, caractérisé en ce que l'élément séparateur (118; 218; 318; 418; 518; 718; 818) pouvant être réchauffé est de conception planiforme (fig. 1 à 5, 7, 8).

5. Assemblage collé détachable selon la revendication 4, caractérisé en ce que l'élément séparateur (118; 218; 318; 418; 518; 718; 818) pouvant être réchauffé est une couche thermoplastique, en particulier une feuille thermoplastique (fig. 1 à 5, 7, 8).

6. Assemblage collé détachable selon la revendication 5, caractérisé en ce que la couche thermoplastique (118; 218; 318; 418; 518; 718; 818) est électroconductrice, de sorte que son réchauffement peut se faire par arrivée de courant, la couche thermoplastique contenant les éléments suivants comme additifs de conductibilité :
- polymères intrinsèquement conductibles ;
- suies électroconductrices ; ou
- graphite ; ou
- poudre de métal, fibres de métal ou aiguilles de métal, en particulier à base d'aluminium, de cuivre, d'argent ou de tungstène ; ou
- avec des métaux, en particulier aluminium, cuivre, argent ou tungstène, matières de charge revêtues, en particulier micro-sphères de verre revêtues de métal et fibres de textile revêtues de métal ; ou
- mélanges de ces matériaux.

7. Assemblage collé détachable selon la revendication 6, caractérisé en ce qu'il contient en tant que polymère intrinsèquement conductible de la polyaniline ou un mélange à base de polyaniline et de chlorure de polyvinyle.

8. Assemblage collé détachable selon la revendication 6, caractérisé en ce qu'il contient comme matières de charge recouvertes de métal des micro-sphères de verre recouvertes de métal ou des fibres de textile recouvertes de métal.

9. Assemblage collé détachable selon la revendication 8, caractérisé en ce qu'il contient comme fibres textiles recouvertes de métal des fibres de polyacrylonitrile recouvertes de métal.

10. Assemblage collé détachable selon la revendication 5, caractérisé en ce que l'élément séparateur (118; 218; 318; 418; 518; 718; 818) pouvant être réchauffé est une feuille pouvant être réchauffée au moyen de rayonnement à haute fréquence.

11. Assemblage collé détachable selon la revendication 5, caractérisé en ce que l'élément séparateur (118; 218; 318; 418; 518; 718; 818) pouvant être réchauffé est une feuille pouvant être réchauffée au moyen de rayonnement micro-ondes.

12. Assemblage collé détachable selon la revendication 5, caractérisé en ce que l'élément séparateur (118; 218; 318; 418; 518; 718; 818) pouvant être réchauffé est une feuille pouvant être réchauffée au moyen de rayonnement infrarouge.

13. Assemblage collé détachable selon l'une quelconque des revendications 1 à 12, caractérisé en ce qu'il présente deux cordons de collage (612, 613) dont l'un (612) est conçu comme élément séparateur pouvant être réchauffé qui, en cas de réchauffement à une température à laquelle l'autre cordon de collage (613) n'est pas encore endommagé, perd ou détruit l'adhérence sur les parties (610) jointes et libère alors l'autre cordon de collage (fig. 6).

14. Procédé pour la fabrication d'un assemblage collé détachable sur lequel la jonction des deux parties reliées entre elles (110, 114; 210, 214; 310, 314; 410, 414; 510, 514; 610, 614; 710, 714; 810, 814) s'effectue au moyen d'au moins un cordon de collage intercalé (112; 212; 312, 313; 412, 413; 512; 612, 613; 712A, 712B, 713; 812, 813), et qui est détachable au moyen d'un élément séparateur polymère pouvant être réchauffé, caractérisé en ce qu'un élément séparateur thermoplastique (118; 218; 318; 418; 518; 612; 718; 818), séparé et pouvant être réchauffé par arrivée de courant ou de rayonnement, est disposé sur ou dans le cordon de collage (112; 212; 512) ou l'un des cordons de collage (418; 712A, 712B; 813) ou en ce que l'un des cordons de collage (612) est conçu comme tel, l'élément séparateur perdant ou détruisant l'adhérence sur les parties jointes de l'assemblage lors du réchauffement à une température à laquelle le cordon de collage concerné (112, 212, 418, 512, 612, 712A, 712B, 812) n'est pas encore endommagé, et libérant alors les parties jointes du cordon de collage concerné (112, 212, 418, 512, 612, 712A, 712B, 812), de sorte que le cordon de collage concerné reste utilisable après le décollage pour un recollage de la pièce restée reliée (114; 214; 314; 414; 510; 610; 714; 814), et l'élément séparateur thermoplastique étant à base d'un matériau qui est sélectionné dans le groupe suivant :
- polyoléfines, en particulier polyéthylènes, polypropylènes atac tiques, polybutènes et leurs copolymères ;
- copolymères éthylène-acétate de vinyle ;
- copolymères éthylène-acide acrylique ;
- copolymères éthylène-acide méthacrylique et sels métalliques correspondants ;
- copolymères éthylène-acétate de vinyle greffés et/ou seg mentés;
- copolymères éthylène-propylène-diène ;
- polyuréthanes thermoplastiques ;
- polyesters et copolyesters saturés ;
- polyamides et copolyamides ;
- polyacrylates et polyméthacrylates ; et
- copolymères tribloc ou bibloc, en particulier à base de blocs de polyamide, de polyester et/ou de polyéther ou de blocs de polystyrène, de polybutadiène et de polyisobutylène.

15. Procédé selon la revendication 14, caractérisé en ce que l'élément séparateur (118; 418; 518) pouvant être réchauffé est placé (figures 1, 4, 5), avant l'application du cordon de collage ou des cordons de collage (112; 412, 413; 512) sur les parties à relier (110; 114; 410, 414; 510; 514), sur l'une de ces parties (110; 410; 514) (fig. 1, 4, 5).

16. Procédé selon la revendication 14, caractérisé en ce que l'élément séparateur (218; 318; 718; 818) pouvant être réchauffé est placé (figures 2, 3, 7, 8), avant l'application du cordon de collage ou des cordons de collage (212; 312, 313; 712A, 712B, 713; 812, 813) sur les parties à relier (210; 214; 310, 314; 710, 714; 810, 814), à l'intérieur du cordon de collage ou de l'un des cordons de collage (212; 712A, 712B; 813) ou entre deux cordons de collage (312, 313) (fig. 2, 3, 7, 8).

17. Procédé selon la revendication 14, caractérisé en ce que l'introduction de l'élément séparateur (218; 318; 718; 818) pouvant être réchauffé à l'intérieur du cordon de collage ou de l'un des cordons de collage (212; 712A, 712B; 813) ou entre deux cordons de collage (312, 313) s'effectue par coextrusion avec celui-ci ou ceux-ci.

18. Procédé selon l'une ou plusieurs des revendications 14 à 17, caractérisé en ce que l'élément séparateur (118; 218; 318; 418; 518; 718; 718; 818) pouvant être réchauffé est de conception planiforme (fig. 1 à 5, 7, 8).

19. Procédé selon la revendication 18, caractérisé en ce que l'élément séparateur (118; 218; 318; 418; 518; 718; 818) pouvant être réchauffé est une couche thermoplastique, en particulier une feuille thermoplastique (fig. 1 à 5, 7, 8).

20. Procédé selon la revendication 19, caractérisé en ce que la couche thermoplastique (118; 218; 318; 418; 518; 718; 818) est électroconductrice, de sorte que son réchauffement peut se faire par arrivée de courant, la couche thermoplastique contenant les éléments suivants comme additifs de conductibilité :
- polymères intrinsèquement conductibles ;
- suies électroconductrices ; ou
- graphite ; ou
- poudres de métal, fibres de métal ou aiguilles de métal, en particulier à base d'aluminium, de cuivre, d'argent ou de tungstène ; ou
- les matières de charge recouvertes avec des métaux, en particulier aluminium, cuivre, argent ou tungstène, en particulier micro-sphères de verre revêtues de métal et fibres de textile revêtues de métal ; ou
- mélanges de ces matériaux.

21. Procédé selon la revendication 20, caractérisé en ce que la couche thermoplastique (118; 218; 318; 418; 518; 718; 818) contient en tant que polymère intrinsèquement conductible de la polyaniline ou un mélange à base de polyaniline et de chlorure de polyvinyle.

22. Procédé selon la revendication 20, caractérisé en ce qu'il contient comme matières de charge recouvertes de métal des micro-sphères de verre recouvertes de métal ou des fibres de textile recouvertes de métal.

23. Procédé selon la revendication 20, caractérisé en ce qu'il contient comme fibres textiles recouvertes de métal des fibres de polyacrylonitrile recouvertes de métal.

24. Procédé selon la revendication 19, caractérisé en ce que l'élément séparateur (118; 218; 318; 418; 518; 718; 818) pouvant être réchauffé est une feuille pouvant être réchauffée au moyen de rayonnement à haute fréquence.

25. Procédé selon la revendication 19, caractérisé en ce que l'élément séparateur (118; 218; 318; 418; 518; 718; 818) pouvant être réchauffé est une feuille pouvant être réchauffée au moyen de rayonnement micro-ondes.

26. Procédé selon la revendication 19, caractérisé en ce que l'élément séparateur (118; 218; 318; 418; 518; 718; 818) pouvant être réchauffé est une feuille pouvant être réchauffée au moyen de rayonnement infrarouge.

27. Procédé selon l'une quelconque ou plusieurs des revendications 14 à 26 pour la fabrication d'un assemblage collé détachable qui présente deux cordons de collage (612, 613), caractérisé en ce qu'un cordon de collage (612) est conçu comme élément séparateur thermoplastique pouvant être réchauffé qui, en cas de réchauffement à une température à laquelle l'autre cordon de collage (613) n'est pas encore endommagé, perd ou détruit l'adhérence sur les parties jointes (610) de l'assemblage et libère (figure 6) alors l'autre cordon de collage (613) (fig. 6).

28. Utilisation d'émetteurs de rayonnement à haute fréquence pour la séparation d'assemblages collés détachables selon la revendication 10.

29. Utilisation d'émetteurs de rayonnement micro-ondes pour la séparation d'assemblages collés détachables selon la revendication 11.

30. Utilisation d'émetteurs de rayonnement infrarouge pour la séparation d'assemblages collés détachables selon la revendication 12.

31. Utilisation de lasers à infrarouge selon la revendication 30.
